# EUROPEAN PATENT APPLICATION

(11) **EP 0 613 710 A1**
(43) Date of publication of application: **07.09.1994**
(21) Application number: 94201137.0
(22) Date of filing: 25.05.1989
(51) Int. Cl.: B01D 27/08, B01D 46/24, B01D 35/30

(54) **Filtering apparatus**

(30) Priority: 27.05.1988 GB 8812672
(62) Divisional of application: 89305283.7
(71) Applicant: PALL CORPORATION, Glen Cove New York 11542 (US)
(72) Inventor: Buttery, Roger A., Petersfield, Hampshire GU32 2JD (GB)
(74) Representative: Knott, Stephen Gilbert

(57) **Abstract**

The disclosure describes a filtering apparatus 10 and a method for manufacturing a filtering apparatus comprising a housing 11 and a filter arrangement 12 disposed within the housing 11. The housing 11 may have first and second identical body portions 23, 24. The filter arrangement 12, which may include an end cap 45 and a filter element 36, may be secured within the housing 11 solely by mechanical compression between the first and second body portions 23, 24.

## Description

The present invention relates to filters and, more particularly, to an apparatus for filtering impurities from a fluid, i.e., a liquid or a gas, and a method of manufacturing such a filtering apparatus.

A fluid may contain many different impurities, and, in a variety of circumstances, these impurities must be removed before the fluid can be used. For example, in many medical applications, impurities must be filtered from a liquid before the liquid can be passed into a patient.

Ideally, a filtering apparatus for removing impurities from a fluid would be as inexpensive as possible. This is especially true in the medical field where skyrocketing costs are a major burden, and the expense of an apparatus or procedure may limit the availability of the apparatus or procedure.

DE-A-2720012 discloses filtering apparatus in which end units are joined to a body. Both end units have pegs. The pegs of one end unit locate one end of a cylindrical filter medium. The other end of the medium carries a cap which closes that end of the medium and which is spaced from the other end cap by the pegs of that end cap.

Accordingly, the present invention provides an apparatus for filtering a fluid comprising a housing having first and second openings and defining a fluid flow path between the first and second openings, the housing including identical first and second body portions joined to one another, and a filter arrangement disposed within the housing in the fluid flow path and including a filter element having a first surface communicating with the first opening and a second surface communicating with the second opening, the filter arrangement being secured within the housing solely by mechanical compression between the first and second body portions, and a plurality of ribs provided within each body portion, the ribs of the second body portion engaging an exterior of the filter element to center the filter element within the housing.

Various aspects of the present invention each contribute to a reduction in the cost of the filtering apparatus. For example, by forming the housing from two identical body portions, the expense of making a mold for more than one body portion and the expense of separate molding procedures for more than one body portion are eliminated. By securing the filter arrangement within the housing solely by mechanical compression, the filter apparatus may be more quickly and, therefore, more inexpensively manufactured because the additional step of adhering or welding the filter arrangement to the housing is not required. Further, by abutting one end of the filter element directly against an end of the housing, the number and, therefore, the cost of components is reduced because no end cap is required on that end of the filter element.

While it is relatively inexpensive, a filtering apparatus according to the present invention is nonetheless highly reliable and effective. Mechanical compression of the filtering apparatus ensures that it remains securely in place, and the protrusion of the seal edges into the ends of the filter element prevents the fluid from bypassing the filter element as the fluid flows through the filtering apparatus.

Filtering apparatus embodying the invention will now be described, by way of example only, with reference to the accompanying diagrammatic drawings, in which:

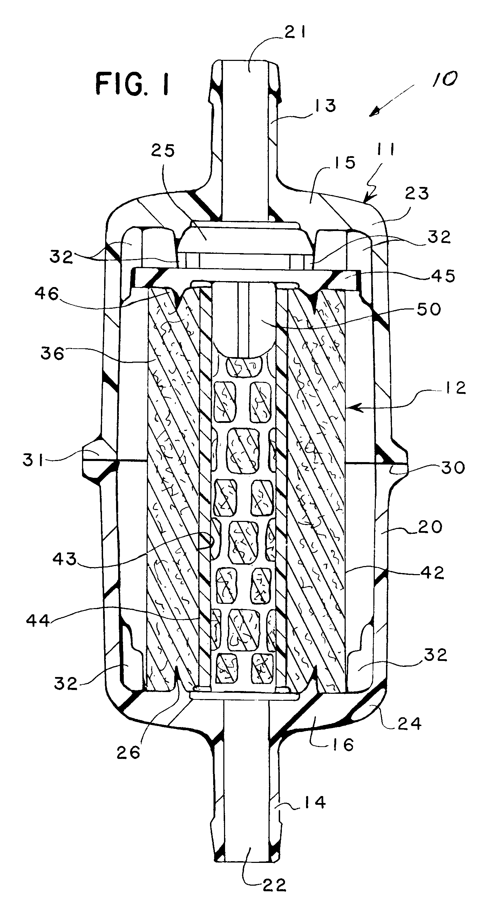

Figure 1 is a sectional side view of an exemplary filtering apparatus according to the invention; and

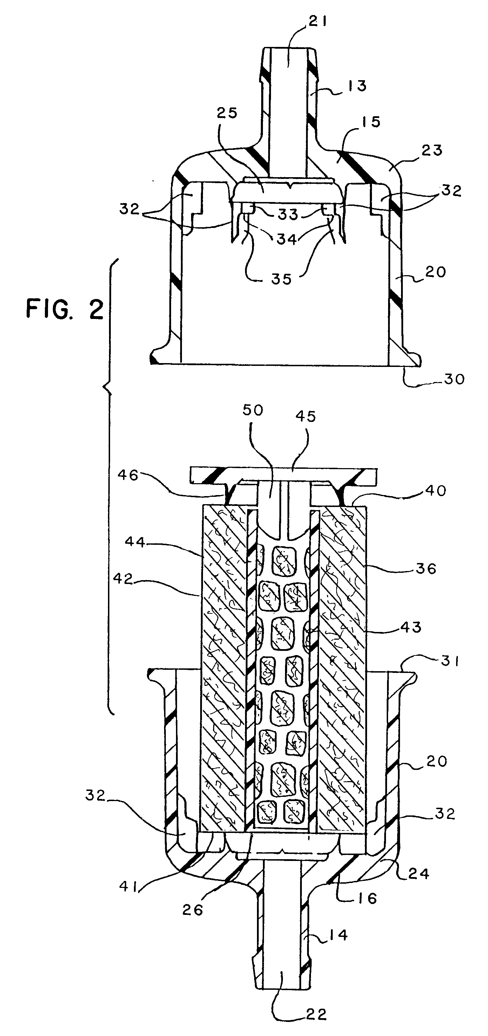

Figure 2 is an exploded sectional side view of the exemplary filtering apparatus of Figure 1.

As shown in the figures, an exemplary filtering apparatus 10 embodying the present invention generally comprises a housing 11 and a filter arrangement 12 disposed within the housing 11. The housing 11 has an inlet 13 and an outlet 14 and defines a fluid flow path through the housing between the inlet 13 and the outlet 14. The filter arrangement 12 is positioned in the fluid flow path to remove impurities from fluid flowing through the housing 11.

The housing may have any suitable configuration and may be fashioned from any appropriately impervious material which is chemically compatible with the fluid to be filtered. In the exemplary filtering apparatus 10, the housing 11 is preferably fashioned in a generally cylindrical configuration from a polymeric material, including a thermoplastic such as polyvinylchloride, acrylonitrile butadiene styrene, polyethylene, polypropylene, or polyamide. The housing 11 has an inlet end portion 15 which includes the inlet 13, an outlet end portion 16 which includes the outlet 14, and each end portion 15, 16 has a side wall 20 which side walls together substantially extend between the inlet and outlet 13, 14. The inlet 13 and the outlet 14 are disposed coaxially with respect to the housing 11 and each may be formed as any suitable connector. For example, the inlet and the outlet may be formed as threaded connectors or "quick release" connectors. In the exemplary filter assembly 11, the inlet 13 and the outlet 14 are formed as hose connectors, each comprising a cylindrical protrusion having an exterior lip and a respective central opening 21, 22 which provides communication between the outside and inside of the housing 11.

The housing is formed from first and second body portions, preferably identical body portions. In the exemplary filtering apparatus 10, the housing 11 is formed from an inlet body portion 23 and an identical outlet body portion 24 joined to one another at join faces 30, 31 extending circumferentially about the side wall 20 of the housing 11. Each body portion 23, 24 includes one end portion 15, 16 of the housing 11 and a seal edge 25, 26 which projects axially inwardly from the interior of the housing 11. Preferably, each seal edge 25, 26 is formed integrally with the housing 11 and has a generally annular configuration encircling the opening 21, 22 of the inlet 13 or the outlet 14 respectively.

The filtering apparatus further includes a structure for properly positioning and securing the filter arrangement within the housing. This structure may be variously configured including, for example, as an annular boss along the interior of the housing. In the exemplary filtering apparatus 10, the housing 11 includes a plurality of ribs 32 positioned within each end portion 15, 16 of the housing 11, preferably integrally formed with the housing 11. Although the ribs may be formed in a variety of shapes, each rib 32 of the exemplary filtering apparatus 10 has a "stepped" configuration including three different surfaces. The first surface 33 of each rib is nearest the respective outer end of the end portion 15, 16 of the housing 11 at which the rib 32 is located and faces substantiallv radially inwardly. The second surface 34 is generally perpendicular to the first surface 33 and faces substantially axially inwardly. The third surface 35 is generally perpendicular to the second surface 34, is closer to the side wall 20 of the housing 11 than the first surface 33, and faces substantially radially inwardly.

The filter arrangement may be variously configured without departing from the scope of the invention. For example, it may be designed for axial flow or radial inside-out flow; it may include a pleated element of membrane sheeting or a porous membrane of annular section; or it may include a sorbent material for sorbing certain impurities. In the exemplary filtering apparatus 10, the filter arrangement 12 includes a hollow, generally cylindrical filter element 36 coaxially disposed within the housing 11 and designed for radial outside-in flow. The filter element 36 includes first and second porous plane end surfaces 40, 41, an outer cylindrical surface 42 which communicates with the inlet 13, and an inner cylindrical surface 43 which communicates with the outlet 14. The filter element 36 may comprise any suitable filter medium and may have any appropriate absolute pore rating for removing impurities. For example, in the exemplary filtering apparatus 10, the filter medium may comprise an annular section mass of polymeric microfibers, such as that available from Pall Corporation under the trademark PROFILE, and may have an absolute pore rating in the range from about 90 microns to less than 1 micron.

The exemplary filtering apparatus 10 also includes a perforated core 44 and a blind end cap 45. The perforate core 44 may be positioned circumjacent to the inner surface 43 of the filter element 36 to support the filter element 36 against the forces associated with the pressure drop across the filter element 36. The blind end cap 45 caps the first end surface 40 of the filter element 36. The blind end cap includes a generally annular seal edge 46 which protrudes into the first end surface 40 of the filter element 36, opposing the seal edge 26 on the outlet end portion 16 of the housing 11 which protrudes into the second end surface 41 of the filter element 36. The end cap 45 also includes a centring tongue 50 which fits within the core 44 to centre the end cap 45 on the first end surface 40 of the filter element 36.

The filter arrangement 12 is secured within the housing 11 solely by mechanical compression between first and second surfaces of the housing 11. For example, in the exemplary filtering apparatus 10, the filter arrangement 12 is secured between a first surface which comprises the plurality of second surfaces 34 of the ribs 32 within the inlet end portion 15 of the housing 11 and a second surface which comprises the interior surface of the outlet end portion 16 of the housing 11. The end cap 45 abuts but is not joined to the plurality of second surfaces 34 of the ribs 32 while the second end surface 41 of the filter element abuts but is not joined to the interior surface of the outlet end portion 16 of the housing 11. Further, the end cap 45 abuts but is not joined to the first end surface 40 of the filter element 36.

An exemplary method of manufacturing a filtering apparatus, such as the exemplary filtering apparatus 10, generally comprises bringing one end of a filter element into contact with a body portion having a seal edge which projects toward that end of the filter element and bringing the other end of the filter element into contact with an end cap having a seal edge which projects toward that end of the filter element. For example, the outlet body portion 24 of the housing 11 may be placed in the lower rest of a hot plate welding machine with the join face 31 of the outlet body portion 24 facing upwardly. The filter element 36 may then be placed in the outlet body portion 24 with the second end surface 41 of the filter element resting on the seal edge 26 of the outlet body portion 24. The first surfaces 33 of the ribs 32 on the outlet body portion 24 serve to centre the filter element coaxially within the housing 11. The end cap 45 may then be placed on the first end surface 40 of the filter element 36 with the centring tongue 50 positioned in the core 44 and the seal edge 46 of the end cap 45 resting on the first end surface 40 of the filter element 36. To stabilize this partial assembly, the welding machine may include a support rod which extends through the outlet opening 22 and the outlet 14 and through the centre of the core 44 and engages the centring tongue 50 of the end cap 45.

Alternatively, the inlet body portion 23 may be placed in the lower rest of a hot plate welding machine with the join face 30 facing upwardly. The blind end cap 45 may then be placed on the plurality of second surfaces 34 of the ribs 32 on the inlet body portion 23. The third surfaces 35 of the ribs 32 serve to centre the end cap 45 in the inlet body portion 23. The first end 40 of the filter element 36 may then be placed on the seal edge 46 of the end cap 45 with the centring tongue 50 positioned within the core 44.

The exemplary method of manufacturing the filtering apparatus further comprises joining the first body portion to a second body portion to form a housing, driving the seal edges into the respective ends of the filter element, and securing the end cap and the filter element within the housing solely by mechanical compression between the body portions. For example, if the filter element 36 and the end cap 45 have been placed in the outlet body portion 24 in the lower rest, the inlet body portion 23 may be placed over the outlet body portion 24 with the respective join faces 30, 31 facing one another. A hot plate may be brought into contact with the join faces 30, 31 for a predetermined amount of time sufficient to soften or melt the join faces 30, 31. The join faces 30, 31 are then forced together, joining the inlet body portion 23 to the outlet body portion 24. Alternatively, if the end cap 45 and the filter element 36 have been placed in the inlet body portion 23 in the lower rest, the outlet body portion 24 may be placed over the inlet body portion 23 with the respective join faces 31, 30 facing one another. A hot plate may be brought into contact with the join faces 31, 30 for a predetermined amount of time sufficient to soften or melt the join faces 31, 30. The join faces 31, 30 are then forced together, joining the outlet body portion 24 to the inlet body portion 23. The join faces 30, 31 may alternatively be joined in any other suitable manner including, for example, sonic welding, vibration welding, spin bonding, bonding by an adhesive, or molding a circumferential collar around the join faces 30, 31.

As the join faces 30, 31 are forced toward one another, the third surfaces 35 of the ribs 32 in the inlet body portion 23 centre the end cap 45 within the inlet body portion 23, and the second surfaces 34 of the ribs 32 contact the end cap 45. As the join faces 30, 31 are further forced toward one another, the filter arrangement 12 is compressed between the inlet and outlet body portions 23, 24, driving the seal edge 46 of the end cap 45 and the seal edge 26 of the outlet body portion 24 into the first and second ends 40, 41 of the filter element 36. Alternatively, the seal edge 46 of the end cap 45 may have been driven into the first end 40 of the filter element 36 before the filter element 36 was placed in the outlet body portion 24.

In accordance with the invention, the housing 11 is dimensioned such that once the join faces 30, 31 are joined to one another, the filter arrangement 12 is tightly secured solely by mechanical compression between the inlet and outlet body portions 23, 24. For example, in the exemplary filtering apparatus 10, the filter arrangement 12 is tightly secured between the second surfaces 35 of the ribs 32 in the inlet body portion 23 and the interior surface of the outlet end 16 of the housing 11 with the first and second ends 40, 41 of the filter element 36 tightly wedged against the end cap 45 and the outlet end 16 of the housing 11.

In the preferred mode of operation, the hose connectors of the inlet 13 and the outlet 14 of the exemplary filtering apparatus 10 may be attached to hoses (not shown) of a fluid system. Fluid to be filtered may then be directed into the exemplary filtering apparatus 10 to the inlet 13 where it is diverted by the end cap 45 to the outer, upstream surface 42 of the filter element 36. The fluid is then forced radially inwardly through the filter medium of the filter element 36 where the impurities are removed from the fluid. The fluid is prevented from flowing around the first end 40 of the filter element 36 and bypassing the filter medium of the filter element 36 by the seal formed between the first end 40 of the filter element 36 and the end cap 45. Likewise, the fluid is prevented from flowing around the second end 41 of the filter element 36 and bypassing the filter medium of the filter element 36 by the seal formed between the second end 41 of the filter element 36 and the outlet end 16 of the housing 11. The filtrate exits the filter element 36 at the inner, downstream surface 43, passes through the perforated core 44, and then flows axially through the outlet 14.

A filtering apparatus according to the present invention may be used in a variety of applications. For example, the filtering apparatus may be used to filter liquids such as water and, specifcially, as a prefilter for the water supply of a dialysis machine. Because the filtering apparatus is relatively inexpensive, it may be frequently replaced to prevent the accumulation of impurities, such as harmful bacteria. More generally, the filtering apparatus may be used as a filter for drink dispensers or as a general purpose filter for filtering a variety of fluids in laboratories.

While the invention has been described in connection with a preferred embodiment of a filtering apparatus and a preferred method for manufacturing a filtering apparatus , there is no intent to limit the invention to the preferred embodiment or method. On the contrary, the intent is to cover all alternatives, modifications, and equivalents which may be included within the scope of the invention as defined by the appended claims.

Filters sold under the trade mark PROFILE, hereinbefore referred to, have the following essential characteristics:
"A cylindrical fibrous structure comprising a fibrous mass of non-woven, synthetic, polymeric microfibers, said microfibers being substantially free of fiber-to-fiber bonding and secured to each other by mechanical entanglement or intertwining, and said fibrous mass having a substantially constant voids volume over at least a substantial portion thereof as measured in the radial direction, the constant voids volume being combined with graded fiber cross-section whereby a varying pore size is provided over said substantial portion."

## Claims

1. An apparatus for filtering a fluid comprising a housing (11) having first and second openings (13,14) and defining a fluid flow path between the first and second openings (13,14), the housing (11) including identical first and second body portions (23,24) joined to one another, and a filter arrangement (12) disposed within the housing in the fluid flow path and including a filter element (36) having a first surface (42) communicating with the first opening (13) and a second surface (43) communicating with the second opening (14), the filter arrangement (12) being secured within the housing (11) solely by mechanical compression between the first and second body portions (23,24), and a plurality of ribs (32) provided within each body portion (23,24), the ribs (32) of the second body portion (24) engaging an exterior of the filter element (36) to center the filter element (36) within the housing (11).

2. Apparatus according to claim 1 wherein the housing (11) includes a first end (15) having the first opening (13) and a second end (16) having the second opening (14), and wherein each body portion (23,24) includes one end of the housing (11).

3. Apparatus according to claim 2 wherein each body portion (23,24) further includes a seal edge (25,26) projecting inwardly from the end of the housing (11) and encircling the openings (13,14), the seal edge (25,26) of at least one body portion (23,24) protruding into the filter element (36) through an end surface (40,41) between the first surface (42) and the second surface (41), thereby forming a seal.

4. Apparatus according to claim 3 wherein at least one rib (32) is disposed near each end of the housing (11), each rib (32) having first and second mutually perpendicular surfaces (33,34), the first surface (33) of the rib (32) of the second end (16) engaging the first surface (42) of the filter element (36) for centering the filter element (36) within the housing (11).

5. Apparatus according to claim 4 including a blind end cap (45) disposed within the first portion (23), wherein at least one rib (32) located in the first portion (23) includes a third surface (35), generally perpendicular to the second surface (34), the end cap being centered by the third surface (35).

6. Apparatus according to claim 4 wherein second surface (34) of at least one rib (32) fixes the axial position of a blind end cap (45) within the housing (11).

7. Apparatus according to claim 2 wherein the housing (11) is substantially cylindrical and the first and second body portions (23,24) being joined to one another circumferentially at the side wall (20), wherein the filter element (36) is hollow, generally externally cylindrical and is disposed coaxially within the housing (11) with the second end (41) of the filter element (36) abutting a second end surface of the housing (11).

8. Apparatus according to claim 5 or 6 wherein the blind end cap (45) is secured to the filter element (36) solely by mechanical compression between the second surfaces (34) of the ribs (32) of the first body portion (23) and the first end of the filter element (36).

9. Apparatus according to claim 5, 6, or 7 wherein the blind end cap (45) includes a projecting seal edge (46), and a first end surface (40) of the filter element (36) abutting the end cap (45) with the seal edge (46) of the end cap (45) protruding into the filter element (36) through first end surface (40) between the first surface (42) and the second surface (41), thereby forming a seal.

10. Apparatus according to claims 2 and 4 to 9 including a seal edge (26) projecting inwardly from the second end (16) of the housing (11), the second end surface (41) of the filter element (36) abutting the second end (16) of the housing (11) with the seal edge (26) of the housing (11) protruding into the filter element (36) through the second end surface (41) between the first surface (42) and the second surface (41), thereby forming a seal.
